# EUROPÄISCHE PATENTANMELDUNG

(11) **EP 0 672 636 A2**
(43) Veröffentlichungstag der Anmeldung: **20.09.1995**
(21) Anmeldenummer: 95108630.5
(22) Anmeldetag: 27.11.1991
(51) Int. Cl.: C04B 33/13, C04B 18/06, C04B 18/10

(54) **Verfahren zum Einbinden von schwermetallhaltigem Filterstaub in keramische Formlinge**

(30) Priorität: 27.11.1990 DE 4037624; 07.10.1991 DE 4133136
(62) Teilanmeldung aus: 91920368.7
(71) Anmelder: BETEILIGUNGSGESELLSCHAFT HARSCH GMBH UND CO. KG, D-75015 Bretten (DE); PFITZENMEIER & RAU, D-75438 Knittlingen (DE)
(72) Erfinder: Harsch, Wolfgang, D-75015 Bretten (DE); Bender, Albert, D-75015 Bretten (DE)
(74) Vertreter: Twelmeier, Ulrich, Dipl.Phys.

(57) **Zusammenfassung**

Schwermetallhaltige keramische Formlinge werden hergestellt durch Mischen von Ton, Wasser, schwermetallhaltigem Filterstaub und einem oder mehreren Flußmitteln, Formen von Grünlingen aus der Mischung, und Brennen der Grünlinge bei einer Temperatur zwischen 900°C und 1100°C, wobei die Art und Menge des bzw. der Flußmittel so gewählt wird, daß bei der gewählten Brenntemperatur unterhalb des Erweichungspunktes eine Schmelzphase gebildet wird, die zu einer Verglasung und damit zu einem dauerhaften Einschluß von Schwermetallen im Formling führt.

## Beschreibung

### Technisches Gebiet

Die Erfindung geht aus von einem Verfahren zum Einbinden von schwermetallhaltigem Filterstaub in keramische Formlinge durch Mischen des Filterstaubs mit Ton, Formen von Grünlingen aus der Mischung und Hartbrennen oder Sintern der Grünlinge.

### Stand der Technik

Ein solches Verfahren ist aus der DE-OS 36 12 381 bekannt. Zweck des bekannten Verfahrens ist es, mit giftigen Schwermetallen belastete Filterstäube durch Einbinden in ein bindiges Matrixmaterial derart aufzubereiten, daß sie auf einfachen Hausmülldeponien dauerhaft abgelagert werden können. Zu diesem Zweck wird der Filterstaub mit Ton gemischt und mit einem Zusatzmaterial versetzt, welches die Kapillarität und Wasserbindungskräfte des Tons herabsetzt. Anschließend wird die Mischung zu Formkörpern einer beliebigen ablagerungsfähigen Form und Größe gepreßt. Durch das Zusatzmaterial, ein sulfoniertes, wasserlösliches Öl, soll die Wasseraufnahme der Formkörper verhindert und dadurch das Auswaschen der Schwermetalle verhindert werden. Die Formkörper können in gepreßter und luftgetrockneter Form abgelagert werden, werden jedoch vorzugsweise zur weiteren Verbesserung der physikalischen und chemischen Festigkeit zwischen 600°C und 900°C hartgebrannt oder zwischen 1100°C und 1200°C gesintert. Soweit die Formkörper lediglich gepreßt, aber nicht gebrannt oder gesintert werden, haben sie nur eine geringe Druckfestigkeit und können nur auf Deponien abgelagert, aber nicht als Baustoffe weiterverwendet werden. Außerdem kann auf Dauer ein zu großer Schwermetallanteil ausgewaschen werden. Zu große Auswaschungsraten stellt man auch fest, wenn man die hartgebrannten bzw. gesinterten Formlinge überprüft, wobei bei den gesinterten Formlingen als weiterer Nachteil hinzukommt, daß während des Sinterns ein erheblicher Teil der Schwermetallverbindungen aus den Formkörpern ausgetrieben wird.

Aus der DE-PS 36 30 697 ist es bekannt, schwermetallhaltige Schlämme, insbesondere Galvanikschlämme, mit Ton und Flußmitteln zu vermengen und anschließend bei Temperaturen zwischen 750°C und 1150°C zu Klinkern zu brennen, deren Restporosität kleiner als 6 % ist. Die Bedingungen, unter denen man am besten arbeitet, wenn man mit schwermetallhaltigen Schlämmen Klinker bilden will, lassen sich jedoch nicht auf die Behandlung von schwermetallhaltigen Filterstäuben übertragen, welche beispielsweise in Müllverbrennungsanlagen anfallen, weil sich schwermetallhaltige Schlämme und Filterstäube in ihrer Zusammensetzung stark unterscheiden. Z.B. enthalten Schlämme in erheblichem Ausmaß organische Bestandteile, die in den Filterstäuben nahezu vollständig fehlen. Da aus wirtschaftlichen Gründen ein möglichst hoher Anteil von Schlamm bzw. Filterstaub in der tonhaltigen Mischung angestrebt wird, ist es verständlich, daß sich mit schwermetallhaltigen Schlämmen hergestellte Formlinge beim Brennen anders verhalten als mit Filterstäuben hergestellte Formlinge.

So haben Versuche, das aus der DE-PS 36 30 697 für Schlämme bekannte Verfahren in entsprechender Weise auf das Einbinden von Filterstäuben anzuwenden, gezeigt, daß Ton/Filterstaub-Mischungen erst bei vergleichsweise hohen Brenntemperaturen oberhalb von 1150°C das erforderliche Sinterverhalten zeigen, welches zu einer Fixierung der Schwermetalle in der keramischen Masse führt. Bei einer so hohen Sintertemperatur beobachtet man eine starke Neigung zum Blähen, wodurch die Porosität und mit ihr die Gefahr wächst, daß Schwermetalle aus den keramischen Formlingen ausgetrieben werden. Außerdem hat sich gezeigt, daß beim Brennen ein großer Anteil der im Filterstaub enthaltenen Schwermetallverbindungen, insbesondere von Blei, Kupfer und Zink, ausgetrieben wird und mit dem Abgas des Brennofens ins Freie gelangt, was auf jeden Fall verhindert werden muß.

Aus der EP-A-170 212 ist es bekannt, daß man aus Ton/Filterstaub-Mischungen bei Brenntemperaturen zwischen 700°C und 1300°C, vorzugsweise unterhalb 800°C ein Granulat brennen kann, in welches der Filterstaub eingebunden ist. Das Granulat hat jedoch wie Blähton ein großes Porenvolumen und zeigt zu hohe Auswaschungsraten.

### Darstellung der Erfindung

Der vorliegenden Erfindung liegt die Aufgabe zugrunde, ein Verfahren anzugeben, welches sich in besonderer Weise dazu eignet, schwermetallhaltige Filterstäube dauerhaft in keramische Formlinge einzubinden und welches beim Brennen mit einem geringeren Austreiben von Schwermetallverbindungen verknüpft ist.

Diese Aufgabe wird gelöst durch ein Verfahren mit den im Anspruch 1 angegebenen Merkmalen. Vorteilhafte Weiterbildungen der Erfindung sind Gegenstand der Unteransprüche.

Gemäß Anspruch 1 wird der schwermetallhaltige Filterstaub zunächst mit Ton, Wasser und einem oder mehreren Flußmitteln gemischt und dann werden aus der Mischung Grünlinge geformt und gesintert.

Durch die Zugabe des Flußmittels wird die Temperatur, bei der das Sintern einsetzt, insbesondere aber die Erweichungstemperatur, so weit herabgesetzt, daß man unterhalb einer Brenntemperatur von 1100°C, besser noch unter 1070°C bleiben kann und doch eine Verglasung der Formlinge mit silikatischer Bindung der Schwermetalle erreicht. Durch diese Begrenzung der Brenntemperatur wird das beim Brennen zu beobachtende Austreiben von Schwermetallverbindungen spürbar vermindert. Die bei der niedrigeren Brenntemperatur noch auftretenden Schwermetallverluste können weitgehend aus dem Abgas des Brennofens herausgefiltert werden, insbesondere mit Hilfe von Molekularsieben (Zeolithe), welche sich für diesen Zweck als Rückhaltefilter besonders eignen. Sobald sie ausreichend stark beladen sind, werden sie mit Vorteil der Mischung zur Bildung weiterer Grünlinge zugesetzt und damit die aus dem Abgas herausgefilterten Schwermetallverbindungen in den Entsorgungskreislauf zurückgeführt. Die Molekularsiebe stören beim Brennvorgang nicht, sie wirken sogar in an sich erwünschter Weise als Flußmittel.

Zum Einbinden von Schwermetallen aus Galvanikschlamm in keramische Formlinge eignen sich am besten siliziumreiche Tone. Mit solchen Tonen haben die Erfinder deshalb auch bei ihren ersten Versuchen zum Einbinden von Filterstäuben in keramische Formlinge gearbeitet. Dabei zeigte es sich jedoch, daß mit diesen siliziumreichen Tonen Filterstäube in der Tat nicht befriedigend eingebunden werden konnten: Cadmium und Blei wurden beim Brennen fast vollständig ausgetrieben, die flüchtigen Anteile von Kupfer und vor allem des in Filterstaub in großen Mengen vorhandenen Zink waren unannehmbar hoch. Die Erfinder haben herausgefunden, daß sich ein geringerer Schwermetallaustrieb erzielen läßt mit aluminiumreichen Tonen. Vorzugsweise werden deshalb in Weiterentwicklung der Lehre des Anspruchs 1 Tone verwendet, die mindestens 25 Gew.-% Aluminiumoxid, vorzugsweise mehr als 30 Gew.-% Aluminiumoxid in der Trockenmasse enthalten. Damit läßt sich das Austreiben von Schwermetallverbindungen beim vorgeschlagenen Einsatz von Flußmitteln nochmals verringern. Allerdings wird das mit einer Erhöhung der Brenntemperatur, die leider zu einem verstärkten Aufblähen führt, und mit einer Verminderung des Silikatgehaltes erkauft, der für die silikatische Einbindung der Schwermetallverbindungen in die keramische Masse und für die Beständigkeit gegen ein Auswaschen aus den Formlingen an sich wichtig ist.

Beim Mischen wird die Wasserzugabe so bemessen, daß die Mischung eine für das Formen der Grünlinge günstige Plastizität erreicht, wobei das Formen der Grünlinge am besten durch Strangpressen erfolgt. Um Grünlinge von hohe Dichte und Festigkeit zu erhalten, darf der Wasseranteil andererseits nicht zu hoch sein. Vorzugsweise wird nicht mehr als 350 g Wasser bezogen auf 1000 g der vor dem Formen der Grünlinge vorliegenden Mischung dazugegeben. Am besten stellt man die Mischung so her, daß die Grünlinge eine Stauchhöhe nach Pfefferkorn nahe 30 mm (entspricht einer Pfefferkornzahl von 1,3) erreichen.

Den Anteil des Filterstaubes an der Mischung wählt man aus wirtschaftlichen Gründen so hoch wie möglich. Es hat sich gezeigt, daß man eine hervorragende Einbindung des Filterstaubes und eine nur geringe Auswaschrate selbst unter extremen Bedingungen erreicht, wenn der Anteil des Filterstaubes an der Mischung aus Ton, Flußmittel und Filterstaub nicht mehr als 50 Gew.-% (bezogen auf Trockenmasse) beträgt; vorzugsweise beträgt der Anteil des Filterstaubs an der Mischung ein Drittel (bezogen auf Trockenmasse).

Erfindungsgemäß werden die Grünlinge bei einer Temperatur zwischen 900°C und 1100°C gebrannt. Unterhalt von 900°C laufen noch gasbildende Reaktionen ab, z.B. die Zersetzung von Calziumkarbonat in CaO und CO₂. Unterhalb von 900°C ist der aus dem Grünling gebildete Scherben noch so porös, daß die gebildeten Gase ohne Schwierigkeiten entweichen können, doch er ist zu porös für eine dauerhafte Einbindung der Schwermetalle. Oberhalb von 900°C wird der Scherben zunehmend dichter und die Einbindung der Schwermetalle fester. Mit Annäherung an 1100°C kommt es jedoch zunehmend zur Verflüchtigung von Schwermetallen, was prinzipiell unerwünscht ist und obendrein zu einem Aufblähen der Scherben führt, weil diese bereits verdichtet sind und die Schwermetalle deshalb nicht ohne weiteres entweichen können. Durch das Aufblähen werden die Scherben in Form und Festigkeit zerstört. Hiergegen hilft, daß Flußmittel zugesetzt wird, weil dann beim Brennen bereits unterhalb von 1070°C - 1100°C eine Schmelzphase gebildet wird. Art und Menge des Flußmittels werden ggfs. so gewählt, daß bei der gewählten Brenntemperatur eine Schmelzphase gebildet wird, die zu einer Verglasung und damit zu einem dauerhaften Einschluß der Schwermetalle führt. Der Flußmittelgehalt sollte jedoch nicht zu hoch sein, da mit steigendem Flußmittelgehalt die Plastizität der Mischung, aus welcher die Grünlinge gebildet werden, abnimmt und der aus der Mischung gepreßte Strang bzw. die daraus geformten Grünlinge im ungetrockneten Zustand keine ausreichende Festigkeit mehr haben. Zweckmäßigerweise beträgt der Flußmittelanteil höchstens 20 Gew.-% bezogen auf die Summe aus Ton, Flußmittel und Filterstaub. In der Keramik-, Glas- und Emailleindustrie übliche Flußmittel eignen sich auch für Zwecke der vorliegenden Erfindung, insbesondere Kieselsäure, Nephelin, Syenit, Glaspulver, Borax, Flußspat oder Emaille.

Es hat sich gezeigt, daß anstelle eines herkömmlichen Flußmittels auch Galvanikschlamm zugesetzt werden kann. Der Zusatz von Galvanikschlamm führt ebenfalls zu einem Absinken der Temperatur, bei welcher eine lokale Verglasung einsetzt. Der Zusatz von Galvanikschlamm ist deshalb besonders vorteilhaft, weil auch er Schwermetalle enthält, die dauerhaft eingebunden unschädlich gemacht werden können, so daß zwei Fliegen mit einer Klappe geschlagen werden. Als besonderer Vorteil ist darüberhinaus festzustellen, daß bei Zusatz von Galvanikschlamm insbesondere das sonst sehr problematische Zink gut eingebunden werden kann. Die menge des Galvanikschlamms, die zugesetzt wird, sollte - berechnet als Trockenmasse - nicht größer sein als der Anteil des Filterstaubes selbst.

Vorzugsweise werden die mit Filterstaub hergestellten Grünlinge bei einer Temperatur zwischen 950°C und 1020°C gebrannt. Bei höheren Temperaturen kommt es zu einem Anstieg des Schwermetallaustriebs.

Ob und in welchem Ausmaß die Schwermetalle aus den gesinterten Formlingen wieder ausgewaschen werden können, hängt nicht nur von der Auswahl des Tons, des Flußmittels und der Brenntemperatur ab, sondern zu einem gewissen Teil auch von der Porosität der gesinterten Formlinge. Es wird deshalb angestrebt, die Porosität so niedrig wie möglich zu halten und die Brennbedingungen darauf einzustellen; dies gilt insbesondere für den zeitlichen Verlauf der Brenntemperatur (Brennkurve). Es wurde bereits darauf hingewiesen, daß während des Brennprozesses Gase aus dem Formling entweichen. Vorzugsweise wird eine solche Brennkurve gewählt, daß Gase wie Wasserdampf und Kohlendioxid möglichst langsam ausgetrieben werden. Damit erreicht man, daß die entweichenden Gase keine Risse und keine großen Poren im Formling erzeugen. Die anderen Temperaturbereiche sollen hingegen möglichst schnell durchfahren werden, um so schnell wie möglich den Bereich der Sintertemperatur und damit den gewünschten lokalen Schmelzfluß an den Korngrenzen zu erreichen, der zur festen Einbindung der Schwermetalle führt, bevor diese in größeren Mengen ausgasen können.

### Beispiel:

480 g Ton mit einer Feuchte von 0,4 %, 400 g Flugasche mit einer Feuchte von 20 %, 7 g braunes Emaillepulver und 7 g weißes Emaillepulver werden zunächst 5 Minuten lang trocken miteinander vermischt. Danach werden 300 g Wasser zugegeben und die Mischung nochmals 5 Minuten gerührt. Das Gesamtgewicht der Mischung beträgt 1196 g, davon 31,8 % Wasser und 68,2 % Trockensubstanz. Von der Trockensubstanz entfallen 48 Gew.-% auf Ton, 32 Gew.-% auf die Flugasche und 14 Gew.-% auf das Emaillepulver. Eine chemische Analyse ergab für die Flugasche die folgenden Inhaltstoffe (die Mengenangaben in Gew.-% beziehen sich auf die Trockenmasse):

| | | | | | | |
|---|---|---|---|---|---|---|
| Cd | 0,03 % | Zn | 2,1 % | Na | 2,2 % | wasserlösliche Anionen |
| Cr | 0,04 % | Fe | 3,8 % | K | 4 % | Cl⁻ 13,7 % |
| Cu | 0,09 % | Al | 7 % | C | 4,5 % | SO₄⁻⁻ 3,8 % |
| Ni | 0,01 % | Ca | 7,1 % | S | 1,7 % | Rest: Überwiegend Silizium und Sauerstoff |
| Pb | 0,5 % | Mg | 1,5 % | | | |

Aus der Mischung wird mit einer Vakuum-Strangpresse unter Anwendung von 6,5 bar Preßdruck und 96 % Vakuum ein Strang mit einem Querschnitt von 33 mm x 40 mm gepreßt. Dabei wird soviel Wasser abgedrückt, daß der Strang nach dem Verpressen nur noch eine Feuchte von 26,6 % hat.

Der Strang wird in Probekörper (Grünlinge) unterteilt, die vor dem Brand 3 Tage lang bei 130°C getrocknet werden. Anschließend werden die Grünlinge nach 6 Stunden Aufheizzeit 3 Stunden lang bei einer Temperatur von 1040°C gebrannt. Die Brenntemperatur wurde durch Vorversuche festgelegt. Dabei wurde beobachtet, daß das Sintern bei 920°C begann und der Erweichungspunkt bei 1050°C lag. Da sich der Formling mit Erreichen der Erweichungstemperatur (Übergang in den schmelzflüssigen Zustand) verformt, die Formgebung des Produktes aber vor der Sinterung erfolgt, ist dafür Sorge zu tragen, daß beim Brennen der Erweichungspunkt nicht erreicht wird. Das Sintern wird am besten dicht unterhalb des Erweichungspunktes durchgeführt.

Anschließend wurden die Formlinge gemahlen und der Anteil der Schwermetalle (hauptsächlich Nickel, Chrom, Zink, Kupfer, Blei und Cadmium) analysiert, und zwar einmal nach einem Königswasseraufschluß und einmal nach einem Flußsäureaufschluß (Totalaufschluß). Aus der Differenz der Bestimmungen nach den beiden unterschiedlichen Aufschlüssen kann man darauf schließen, wie groß der Anteil der silikatisch gebundenen Schwermetalle ist; er ergab sich zu 98 %.

Die silikatisch gebundenen Schwermetalle werden aus den keramischen Formlingen nicht ausgelaugt.

### Vergleichsbeispiel:

Zum Vergleich wurde eine Mischung aus 34 Gew.-% ungewaschener Flugasche der im vorangehenden Beispiel angegebenen Zusammensetzung und 66 Gew.-% Ton der im vorangehenden Beispiel angegebenen Zusammensetzung unter den Brennbedingungen
- 6 Stunden Aufheizzeit,
- 3 Stunden Haltezeit,
- Garbrandtemperatur 1080°C
sonst wie im vorangehenden Beispiel angegeben zu Formkörpern verarbeitet und untersucht. Sie zeigten im Vergleich zum vorangehenden Beispiel eine geringere Rohdichte, eine größere offene Porosität und einen wesentlich niedrigeren Anteil von silikatisch gebundenen Schwermetallen, nämlich nur zwischen 65 % und 75 %. Schwermetalle können deshalb trotz erhöhter Brenntemperatur in viel stärkerem Ausmaß ausgewaschen werden.

Ergänzende Untersuchungen zur Optimierung der Brennbedingungen haben gezeigt, dass bei den gewählten Zusammensetzungen die ausgetriebenen Schwermetallmengen bei einer Brenntemperatur von 1080°C ein Minimum haben und bei einer Erhöhung der Temperatur insbesondere Zink verstärkt ausgetrieben wird. Überraschenderweise hat sich gezeigt, daß auch die Eluierbarkeit der Schwermetalle Cd, Zn, Pb, Ni, Cu, Cr ein Minimum aufweist, wenn die Brenntemperatur zu 1070°C bis 1080°C gewählt wird.

Ferner hat sich herausgestellt, daß die ausgetriebenen Schwermetallmengen mit kürzerer Aufheizzeit kleiner werden und daß die Eluierbarkeit der Schwermetalle aus den Formlingen ein Minimum hat, wenn die Aufheizzeit zwischen 3 und 4 Stunden gewählt wird.

Bei Verwendung des in dem Beispiel verwendeten siliziumreichen Tones liegen optimale Brennbedingungen deshalb bei einer Aufheizzeit von 3 bis 4 Stunden, einer maximalen Temperatur von 1070°C bis 1080°C und einer Haltezeit von 2 bis 3 Stunden.

Die Eluierbarkeit ist bei Tonen mit 60 bis 80 % SiO₂-Gehalt und mit Al₂O₃-Gehalten knapp unter 20 % am geringsten, so daß solche Tone bevorzugt werden.

## Patentansprüche

1. Verfahren zum Einbinden von schwermetallhaltigem Filterstaub in keramische Formlinge durch
Mischen des Filterstaubs mit Ton, Wasser und einem oder mehreren Flußmitteln,
Formen von Grünlingen aus der Mischung,
und Brennen der Grünlinge bei einer Temperatur zwischen 900°C und 1100°C,
wobei die Art und Menge des bzw. der Flußmittel so gewählt wird, daß bei der gewählten Brenntemperatur unterhalb des Erweichungspunktes eine Schmelzphase gebildet wird, die zu einer Verglasung und damit zu einem dauerhaften Einschluß der Schwermetalle bzw. ihrer Verbindungen im Formling führt.

2. Verfahren nach Anspruch 1, **dadurch gekennzeichnet**, daß die Grünlinge bei einer Temperatur zwischen 950°C und 1020°C gebrannt werden.

3. Verfahren nach Anspruch 1, **dadurch gekennzeichnet**, daß ein Ton verwendet wird, der mindestens 25 Gew.-% Al₂O₃, vorzugsweise mehr als 30 Gew.-% Al₂O₃, in der Trockenmasse enthält.

4. Verfahren nach einem der vorstehenden Ansprüche, **dadurch gekennzeichnet**, daß bis zu 350 g Wasser bezogen auf 1000 g Trockensubstanz der vor dem Formen der Grünlinge vorliegenden Mischung dazugegeben werden.

5. Verfahren nach einem der vorstehenden Ansprüche, **dadurch gekennzeichnet**, daß maximal 50 Gew.-% Filterstaub (Trockensubstanz) bezogen auf die Summe aus Ton, Flußmittel und Filterstaub zugesetzt werden.

6. Verfahren nach einem der vorstehenden Ansprüche, **dadurch gekennzeichnet**, daß nicht mehr als 20 Gew.-% Flußmittel bezogen auf die Summe aus Ton, Flußmittel und Filterstaub (Trockensubstanz) zugesetzt werden.

7. Verfahren nach einem der vorstehenden Ansprüche, **dadurch gekennzeichnet**, daß als Flußmittel Kieselsäure, Nephelin, Syenit, Glaspulver, Borax, Flußspat oder Emaille zugesetzt wird.

8. Verfahren nach einem der Ansprüche 1 bis 7, **dadurch gekennzeichnet**, daß als Flußmittel Galvanikschlamm zugesetzt wird.

9. Verfahren nach Anspruch 8, **dadurch gekennzeichnet**, daß der Anteil des Galvanikschlamms, berechnet als Trockenmasse, höchstens so groß wie der Anteil des Filterstaubes ist.

10. Verfahren nach einem der vorstehenden Ansprüche, **dadurch gekennzeichnet**, daß die Grünlinge unter teilweiser Entwässerung der Mischung durch Extrudieren geformt, anschließend durch Erwärmen auf eine Temperatur von nicht mehr als 150°C mindestens 1 Tag lang getrocknet und erst danach gebrannt werden.

11. Verfahren nach Anspruch 10, **dadurch gekennzeichnet**, daß die Grünlinge mit einem Preßdruck von mindestens 5 bar extrudiert werden.

12. Verfahren nach Anspruch 10 oder 11, **dadurch gekennzeichnet**, daß die Grünlinge 3 Tage lang bei 130°C getrocknet werden.

13. Verfahren nach einem der vorstehenden Ansprüche, **dadurch gekennzeichnet**, daß beim Brennen ausgetriebene Schwermetallverbindungen aus dem Abgasstrom herausgefiltert und zur Zubereitung einer Mischung für weitere Grünlinge verwendet werden.

14. Verfahren nach Anspruch 13, **dadurch gekennzeichnet**, daß die Schwermetallverbindungen mit Molekularsieben herausgefiltert werden und die beladenen Molekularsiebe zur Zubereitung der Mischung für weitere Grünlinge verwendet werden.

15. Verfahren nach einem der vorstehenden Ansprüche, **dadurch gekennzeichnet**, daß die Grünlinge bei einer knapp unterhalb des Erweichungspunktes liegenden Temperatur gebrannt werden.

16. Verfahren nach Anspruch 1, **dadurch gekennzeichnet**, daß die Grünlinge bei einer Temperatur unterhalb 1070°C gebrannt werden.

17. Verfahren nach einem der vorstehenden Ansprüche, **dadurch gekennzeichnet**, daß beim Brennen Temperaturbereiche unterhalb von 900°C, soweit in denen wesentliche Mengen von Wasserdampf und Kohlendioxid ausgetrieben werden, langsamer durchfahren werden als Temperaturbereiche, in denen unwesentliche Gasmengen, Schwermetalle oder Schwermetallverbindungen ausgetrieben werden.
